# FASCICULE DE BREVET EUROPEEN

(11) **EP 1 679 447 B1**
(45) Date de publication et mention de la délivrance du brevet: **13.03.2013**
(21) Numéro de dépôt: 06290053.5
(22) Date de dépôt: 09.01.2006
(51) Int. Cl.: F16C 35/077, F16C 27/06

(54) **Module de roulement**
Wälzlagereinheit
Roller bearing unit

(30) Priorité: 10.01.2005 FR 0500224
(43) Date de publication de la demande: 12.07.2006
(73) Titulaire: TIMKEN FRANCE, 18102 Vierzon Cedex (FR)
(72) Inventeur: Lavieuville, Matthieu, 18100 Vierzon (FR); Bouet, Jérôme, 18100 Vierzon (FR)
(74) Mandataire: Domenego, Bertrand

(56) Documents cités:
- EP-A- 1 433 688
- DE-A1- 10 307 842
- US-A- 2 650 866

## Description

La présente invention concerne un module de roulement, tel qu'indiqué dans le préambule de la revendication 1 et divulgué dans le document EP 1 433 688.

On connaît dans l'état de la technique des motoréducteurs qui sont montés dans des véhicules automobiles, et qui sont utilisés pour entraîner par exemple les vitres du véhicule entre des positions ouverte et fermée.

Ces motoréducteurs comprennent un roulement pour loger une extrémité d'une vis sans fin.

Un ressort est vissé par une vis sur le côté extérieur du boîtier du réducteur. Ce ressort s'étend à travers une ouverture ménagée dans le boîtier et prend appui sur une bague extérieure du roulement afin d'appliquer une force de précontrainte qui sollicite la vis sans fin vers un pignon du motoréducteur.

Ce réducteur connu est difficile à fabriquer étant donné que le ressort est monté après le montage du roulement.

En outre, le réducteur à un coût important étant donné qu'il comporte de nombreuses pièces à assembler, ce qui engendre des frais de logistique et de manipulation.

L'invention a pour but de pallier ces inconvénients, et de proposer un module de roulement qui permette la fabrication d'un réducteur ayant un coût faible.

A cet effet, l'invention a pour objet un module de roulement du type précité, caractérisé par la partie caractérisante de la revendication 1.

Selon les modes particuliers de réalisation, le module comporte l'une ou plusieurs des caractéristiques des revendications dépendantes 2 à 11.

L'invention sera mieux comprise à la lecture de la description qui va suivre, donnée uniquement à titre d'exemple et faite en se référant aux dessins annexés, sur lesquels :
- la figure 1 est une vue d'un réducteur comprenant un module de roulement selon l'invention ;
- la figure 2 est une vue en perspective du module de roulement de la Figure 1, à l'état assemblé ;
- la figure 3 est une vue éclatée en perspective du module de la figure 2;
- la figure 4 est une vue en perspective de l'enveloppe et de la lame du module selon l'invention à l'état monté ; et
- la figure 5 est une vue éclatée en perspective des éléments de la figure.

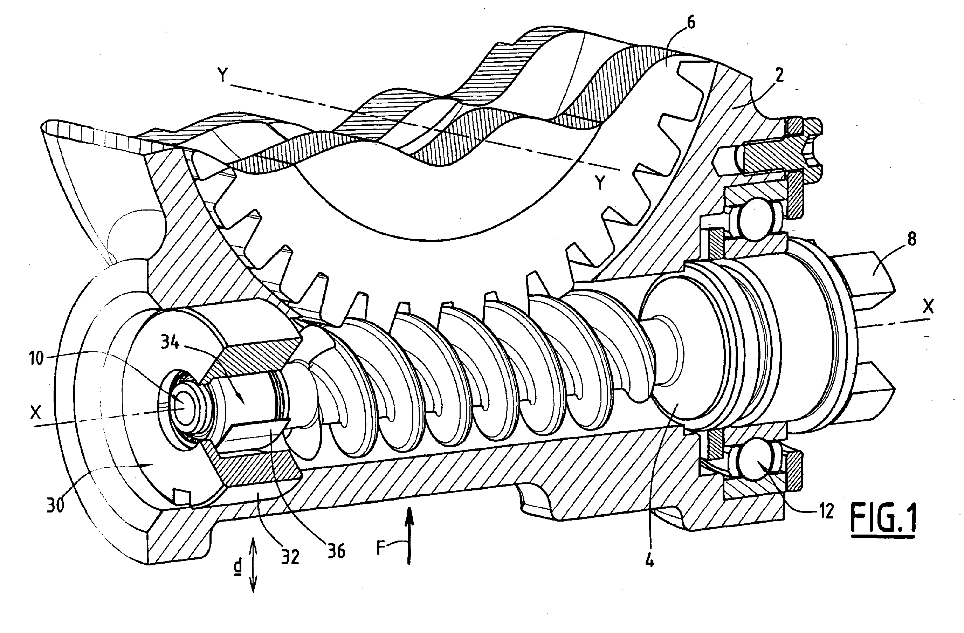

Un réducteur selon l'invention est représenté sur la figure 1 et comprend un boîtier 2, dans lequel est monté, en rotation autour d'un axe central X-X, une vis sans fin 4. Un pignon 6, qui est monté en rotation autour d'un axe de pignon Y-Y, engrène la vis sans fin 4. L'axe Y-Y s'étend perpendiculairement à l'axe central X-X et est décalé de celui-ci.

La vis sans fin 4 comporte une extrémité proximale 8, qui est adaptée pour être reliée de manière solidaire en rotation à un moteur non représenté, et une extrémité distale 10.

L'extrémité proximale 8 est montée sur un roulement à billes 12, et l'extrémité distale 10 est montée sur un roulement à billes 34 d'un module de roulement 30 (voir ci-après).

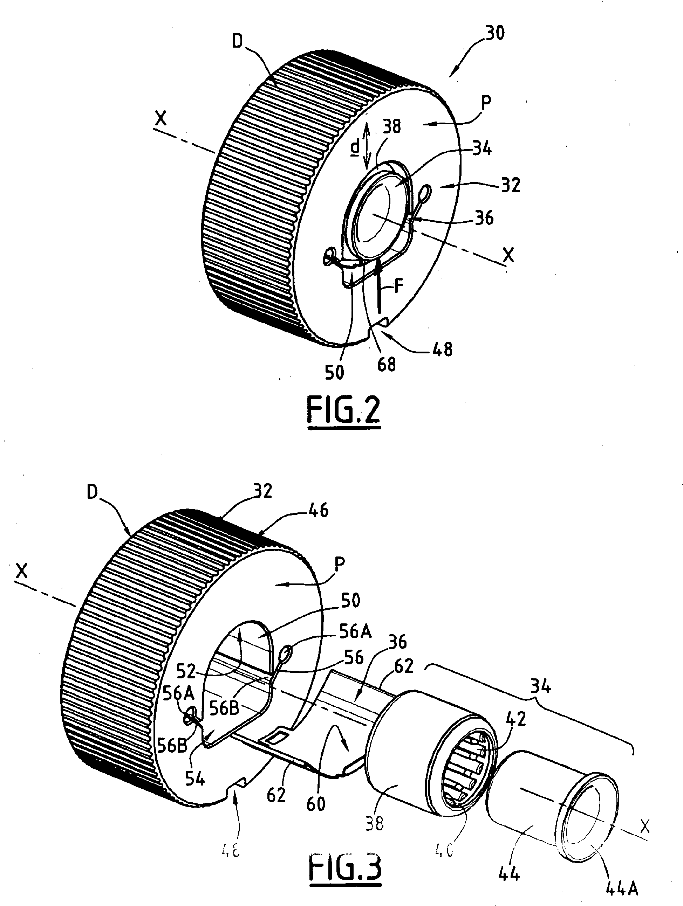

Sur la figure 2 est représenté plus en détail le module de roulement selon l'invention, désigné par la référence générale 30.

A l'état monté, le module 30 s'étend selon l'axe central X-X. Dans ce qui suit, les expressions « axialement », « radialement » et « circonférentiellement » seront utilisées par rapport à cet axe central X-X.

Le module 30 comporte une extrémité proximale P, dirigée à l'état monté vers l'extrémité proximale 8, et une extrémité distale D qui est dirigée à l'état monté dans le sens de l'extrémité distale 10. Les expressions « proximale » et « distale » seront utilisées dans ce qui suit par rapport à cette définition de l'orientation.

Le module 30 comporte une enveloppe extérieure 32, un roulement 34, et un ressort de précontrainte 36.

Comme illustré sur la Figure 3, le roulement 34 est constitué d'une bague de roulement extérieur 38, dans laquelle est disposée une cage 40 qui maintient une pluralité de corps de roulement 42, en l'occurrence des aiguilles, ainsi qu'une bague de roulement intérieure 44 munie d'une collerette proximale 44A.

L'enveloppe 32 est un anneau fermé faisant tout le tour autour de l'axe X-X. Elle est fabriquée d'une seule pièce, par exemple par injection de matière plastique notamment en polyamide 6-6.

Cette enveloppe 32 comporte une surface radialement extérieure 46. Cette surface est cylindrique à section sensiblement circulaire. Elle est cannelée dans la direction axiale. Une seule encoche axiale 48, de dimensions supérieures aux cannelures, est ménagée dans cette surface 46.

L'encoche 48 est radialement et axialement ouverte, et forme un moyen de détrompeur. Cette encoche 48 coopère avec une seule nervure axiale complémentaire solidaire du boîtier 2. Cette nervure n'est pas représentée sur les figures. Ainsi, le module 30 ne peut être inséré dans le boîtier 2 que dans une seule position circonférentielle.

L'enveloppe 32 comporte en outre un logement 50 pour le roulement 34 et le ressort 36. Le logement 50 comporte une première partie 52, qui est dirigée à l'état monté du module vers le pignon 6, et une seconde partie 54, qui est dirigée à l'état montée du module 30, à l'opposé du pignon 6. La première partie 52 a une section transversale à l'axe X-X en forme d'arc de cercle centré sur l'axe X-X, tandis que la seconde partie 54 à une section sensiblement rectangulaire.

Le logement 50 a une longueur radiale L1 qui est supérieure au diamètre extérieur de la bague de roulement 58 et une largeur L2 qui est sensiblement identique à ce diamètre. En conséquence, le logement 50 est conçu de telle sorte que le roulement 34 radialement est mobile par rapport à l'enveloppe selon une seule direction radiale d.

L'enveloppe 32 est munie de deux encoches axiales de réception 56, adaptées pour recevoir le ressort 36. Ces encoches 56 comportent une partie terminale élargie 56A de forme cylindrique, et une partie de liaison 56B sous forme d'une fente axiale qui débouche d'une part dans la partie 56A et d'autre part dans la deuxième partie 54. Ces encoches 56 servent à retenir le ressort 36 radialement et circonférentiellement.

Le ressort 36 est un ressort à lame fabriqué d'un seul tenant en un acier à ressort. Le ressort 36 est cintré et comporte un côté concave 60 qui est tourné vers l'axe central X-X à l'état monté. Chaque extrémité circonférentielle du ressort 36 est munie d'un bourrelet 62 qui est placé dans l'une des parties terminales 56A.

Comme on le voit sur la figure 2, le ressort 36 est disposé entre l'enveloppe 32 et la bague de roulement extérieur 38. Les dimensions du ressort 36, du logement 50, et de la bague extérieure 38, sont choisies de telle manière que le ressort 36 exerce une force F dirigée uniquement radialement sur la bague extérieure 38. La force F est dirigée dans la direction d. Ainsi, la bague 38 est poussée radialement contre la première partie 52 du logement 50, qui forme ainsi une butée radiale de la bague 38. Lorsque la bague 38 s'applique contre la première partie 52, son axe coïncide avec l'axe centrale X-X.

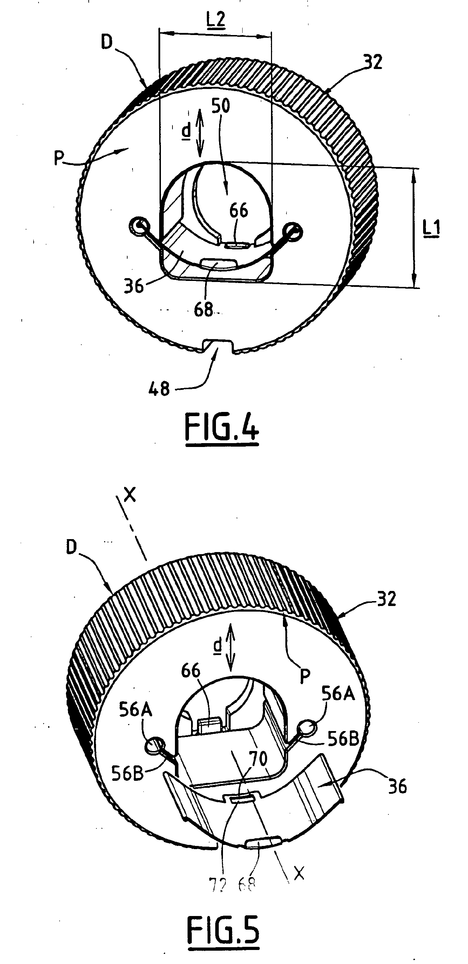

Le module 30 comprend en outre des moyens de retenue axiale adaptés pour retenir axialement la bague de roulement extérieur 38 par rapport à l'enveloppe 32. Comme montré sur les Figures 4 et 5, ces moyens de retenue comprennent, d'une part, une saillie 66 disposée à l'extrémité distale D de l'enveloppe 32 et s'étendant radialement vers l'axe X-X. Cette saillie est venue de matière avec l'enveloppe 32. D'autre part, ces moyens de retenue axiale comprennent un nez de retenue 68 disposé sur l'extrémité proximale du ressort 36. A l'état monté, ce nez 68 chevauche radialement la bague extérieure 38.

En outre, les moyens de retenue axiale comprennent une languette 70 disposée sur l'extrémité distale du ressort 36. Cette languette 70 comporte un évidement 72, ayant une forme complémentaire de celle de la saillie 66 et radialement ouvert vers celle-ci, de telle sorte que la languette 70 peut être amenée en coopération par complémentarité de formes avec la saillie 66 par une déformation élastique radiale du ressort 36.

Le module 30 selon l'invention est assemblé de la manière suivante.

Tout d'abord, le ressort 36 est inséré dans le logement 50 par coulissement axial de ses parties circonférentiellement latérales dans les encoches de réception 56. Les bourrelets 62 viennent alors se loger dans les parties élargies 56A.

Ensuite, le ressort 36 est déformé radialement de manière élastique vers l'extérieur jusqu'à ce que l'évidement 72 engage la saillie 66.

Puis la bague extérieure 38 est insérée axialement dans le logement 50, en franchissant le nez de retenue 68. Une fois la bague 38 en place, le ressort 36 est relâché et sollicite alors la bague 38 élastiquement selon la direction d vers la première partie 52 du logement 50.

Enfin, la bague intérieure 44 est insérée dans la cage 40.

Lors du fonctionnement du réducteur, le module 30 permet un déplacement limité de la vis sans fin 4 par rapport au pignon 6.

Ainsi, lors du démarrage du moteur, l'axe X-X de la vis sans fin 4 est écarté légèrement de l'axe Y-Y du pignon 6 sous la force de réaction due à l'accélération. Un blocage et une usure importante de la vis sans fin 4 et du pignon 6 sont évités.

Le module 30 permet un maintien permanent du contact vis/pignons ce qui :
- limite le bruit généré lors de l'engrènement,
- améliore la réponse du système,
- permet de compenser les tolérances de réalisation des différents composants et d'éviter l'appairage roue/vis, et
- permet d'absorber les variations de température qui pourrait dilater le carter et augmenter l'entraxe vis/pignon.

Le module selon l'invention présente les avantages suivants.

Le ressort 36 étant intégré au module 30, celui-ci peut être préassemblé indépendamment du réducteur. La logistique et la manipulation sont ainsi facilitées.

Le ressort 36 et l'enveloppe 32 intègrent la fonction de retenue axiale de la bague extérieure 38, ce qui supprime la nécessité d'organes séparés prévus à cet effet.

## Revendications

1. Module de roulement (30), du type définissant un axe central (X-X) et comprenant :
- une bague de roulement extérieur (38),
- une enveloppe (32) entourant la bague de roulement extérieur (38), et
- un ressort (36) adapté pour précontraindre la bague de roulement extérieur (38), radialement par rapport à l'axe central (X-X),
le ressort (36) étant disposé entre l'enveloppe (32) et la bague de roulement extérieur (38),
**caractérisé en ce que** l'enveloppe (32) comporte un logement (50) pour la bague de roulement (38) et le ressort (36), et **en ce que** le logement (50) est conçu de telle sorte que la bague de roulement (38) est radialement mobile par rapport à l'enveloppe selon une seule direction radiale (d).

2. Module de roulement selon la revendication 1, **caractérisé en ce que** le ressort (36) est entièrement disposé entre l'enveloppe (32) et la bague de roulement extérieur (38).

3. Module de roulement selon l'une quelconque des revendications 1 ou 2, **caractérisé en ce que** le ressort (36) est un ressort à lame (36).

4. Module de roulement selon la revendication 3, **caractérisé en ce que** le ressort à lame (36) est cintré et comporte un côté concave (60) qui est tourné vers l'axe central (X-X).

5. Module de roulement selon l'une quelconque des revendications précédentes, **caractérisé en ce qu'**il comprend des moyens de retenue (66, 68, 70) adaptés pour retenir axialement la bague de roulement extérieure (38) par rapport à l'enveloppe (32).

6. Module de roulement selon la revendication 5, **caractérisé en ce que** les moyens de retenue comprennent une saillie (66) disposée sur l'enveloppe (32) et s'étendant radialement vers l'axe central (X-X).

7. Module de roulement selon la revendication 5 ou 6, **caractérisé en ce que** les moyens de retenue comprennent un nez de retenue (68) disposé sur le ressort (36) et s'étendant radialement vers l'axe central (X-X).

8. Module de roulement selon la revendication 7, **caractérisé en ce que** les moyens de retenue comprennent une languette axiale (70) disposée à une extrémité axiale du ressort (36) opposé au nez de retenue (68), et **en ce que** cette languette (70) comporte un évidement (72) radial par rapport à l'axe central (X-X) de forme complémentaire de celle du nez de retenue (68).

9. Module de roulement selon l'une quelconque des revendications précédentes, **caractérisé en ce que** l'enveloppe (32) comporte une butée radiale (52) adaptée pour maintenir la bague de roulement extérieure (38) à l'encontre d'une force de précontrainte (F) exercée par le ressort (36).

10. Module de roulement selon la revendication 9, **caractérisé en ce que** lorsque la bague de roulement extérieure (38) s'applique contre la butée radiale (52), son axe coïncide avec l'axe central (X-X).

11. Module de roulement selon l'une quelconque des revendications précédentes, **caractérisé en ce que** l'enveloppe (32) comporte une surface radialement extérieure (46) ainsi qu'une seule encoche axiale (48) qui est ménagée dans cette surface radialement extérieure (46) et qui forme un moyen de détrompeur.

## Claims

1. A bearing module (30), of the type defining a central axis (X-X), and comprising:
- an outer bearing ring (38),
- a casing (32) surrounding the outer bearing ring (38), and
- a spring (36) suitable for pre-stressing the outer bearing ring (38), radially with respect to the central axis (X-X),
the ring (36) being positioned between the casing (32) and the outer bearing ring (38), **characterized in that** the casing (32) includes a housing (50) for the bearing ring (38) and the spring (36), and **in that** the housing (50) is designed so that the bearing ring (38) is radially mobile with respect to the casing along a single radial direction (d).

2. The bearing module according to claim 1, **characterized in that** the spring (36) is entirely positioned between the casing (32) and the outer bearing ring (38).

3. The bearing module according to any of claims 1 or 2, **characterized in that** the spring (36) is a leaf spring (36).

4. The bearing module according to claim 3, **characterized in that** the leaf spring (36) is bent and includes a concave side (60), which is turned towards the central axis (X-X).

5. The bearing module according to any of the preceding claims, **characterized in that** it comprises retaining means (66, 68, 70) suitable for axially retaining the outer bearing ring (38) with respect to the casing (32).

6. The bearing module according to claim 5, **characterized in that** the retaining means comprise a protrusion (66) positioned on the casing (32) and extending radially towards the central axis (X-X).

7. The bearing module according to claim 5 or 6, **characterized in that** the retaining means comprise a retaining nose (68) positioned on the spring (36) and extending radially towards the central axis (X-X).

8. The bearing module according to claim 7, **characterized in that** the retaining means comprise an axial tab (70) positioned at one axial end of the spring (36) opposite to the retaining nose (68), and **in that** this tab (70) includes a radial recess (72) with respect to the central axis (X-X) with a shape mating that of the retaining nose (68).

9. The bearing module according to any of the preceding claims, **characterized in that** the casing (32) includes a radial abutment (52) suitable for maintaining the outer bearing ring (38) against a pre-stress force (F) exerted by the spring (36).

10. The bearing module according to claim 9, **characterized in that**, when the outer bearing ring (38) is applied against the radial abutment (52), its axis coincides with the central axis (X-X).

11. The bearing module according to any of the preceding claims, **characterized in that** the casing (32) includes a radially outer surface (46) as well as a single axial notch (48), which is made in this radially outer surface (46), and which forms a registering means.

## Patentansprüche

1. Wälzlagermodul (30) der Bauart, die eine zentrale Achse (X-X) definiert und umfasst:
- einen äußeren Wälzlagerring (38),
- einen Mantel (32), der den äußeren Wälzlagerring (38) umgibt und
- eine Feder (36), die geeignet ist, den äußeren Wälzlagerring (38) radial im Verhältnis zur zentralen Achse (X-X) vorzuspannen,
wobei die Feder (36) zwischen dem Mantel (32) und dem äußeren Wälzlagerring (38) angeordnet ist, **dadurch gekennzeichnet, dass** der Mantel (32) eine Aufnahme (50) für den Wälzlagerring (38) und die Feder (36) aufweist und dass die Aufnahme (50) derart ausgebildet ist, dass der Wälzlagerring (38) im Verhältnis zum Mantel gemäß einer einzigen radialen Richtung (d) radial bewegbar ist.

2. Wälzlagermodul nach Anspruch 1, **dadurch gekennzeichnet, dass** die Feder (36) voll und ganz zwischen dem Mantel (32) und dem äußeren Wälzlagerring (38) angeordnet ist.

3. Wälzlagermodul nach einem der Ansprüche 1 oder 2, **dadurch gekennzeichnet, dass** die Feder (36) eine Blattfeder (36) ist.

4. Wälzlagermodul nach Anspruch 3, **dadurch gekennzeichnet, dass** die Blattfeder (36) gewölbt ist und eine konkave Seite (60) aufweist, die in Richtung der zentralen Achse (X-X) gedreht ist.

5. Wälzlagermodul nach einem der vorangehenden Ansprüche, **dadurch gekennzeichnet, dass** es Rückhaltemittel (66, 68, 70) umfasst, die geeignet sind, den äußeren Wälzlagerring (38) im Verhältnis zum Mantel (32) axial zurückzuhalten.

6. Wälzlagermodul nach Anspruch 5, **dadurch gekennzeichnet, dass** die Rückhaltemittel einen Vorsprung (66) umfassen, der auf dem Mantel (32) angeordnet ist und sich radial in Richtung der zentralen Achse (X-X) erstreckt.

7. Wälzlagermodul nach Anspruch 5 oder 6, **dadurch gekennzeichnet, dass** die Rückhaltemittel eine Rückhaltenase (68) umfassen, die auf der Feder (36) angeordnet ist und sich radial in Richtung der zentralen Achse (X-X) erstreckt.

8. Wälzlagermodul nach Anspruch 7, **dadurch gekennzeichnet, dass** die Rückhaltemittel eine axiale Zunge (70) umfassen, die an einem axialen Ende der Feder (36) gegenüber der Rückhaltenase (68) angeordnet ist und dass diese Zunge (70) im Verhältnis zur zentralen Achse (X-X) eine radiale Aussparung (72) komplementärer Form zu der Form der Rückhaltenase (68) aufweist.

9. Wälzlagermodul nach einem der vorangehenden Ansprüche, **dadurch gekennzeichnet, dass** der Mantel (32) einen radialen Anschlag (52) aufweist, der geeignet ist, den äußeren Wälzlagerring (38) gegen eine von der Feder (36) ausgeübte Vorspannkraft (F) zu halten.

10. Wälzlagermodul nach Anspruch 9, **dadurch gekennzeichnet, dass**, wenn der äußere Wälzlagerring (38) am radialen Anschlag (52) anliegt, seine Achse mit der zentralen Achse (X-X) übereinstimmt.

11. Wälzlagermodul nach einem der vorangehenden Ansprüche, **dadurch gekennzeichnet, dass** der Mantel (32) eine radial äußere Fläche (46) sowie eine einzige axiale Kerbe (48) aufweist, die in diese radial äußere Fläche (46) eingearbeitet ist und ein Unverwechselbarkeitsmittel bildet.
